# EUROPÄISCHE PATENTSCHRIFT

(11) **EP 3 357 218 B1**
(45) Veröffentlichungstag und Bekanntmachung des Hinweises auf die Patenterteilung: **29.07.2020**
(21) Anmeldenummer: 16797525.9
(22) Anmeldetag: 15.11.2016
(51) Int. Cl.: H04L 29/08, H04L 29/06, H04L 12/841, H04L 12/801

(54) **VERFAHREN ZUR INDUSTRIELLEN KOMMUNIKATION ÜBER TSN**
VERFAHREN ZUR INDUSTRIELLEN KOMMUNIKATION ÜBER EIN TIME SENSITIVE NETWORK (TSN)
PROCÉDÉ DE COMMUNICATION INDUSTRIELLE PAR PROTOCOLE TSN

(30) Priorität: 30.11.2015 DE 102015223722
(43) Veröffentlichungstag der Anmeldung: 08.08.2018
(73) Patentinhaber: Siemens Aktiengesellschaft, 80333 München (DE)
(72) Erfinder: GÖTZ, Franz-Josef, 91180 Heideck (DE); SCHMITT, Jürgen, 90766 Fürth (DE); TALANIS, Thomas, 91336 Heroldsbach (DE); VOLKMANN, Frank, 90475 Nürnberg (DE)
(86) Internationale Anmeldenummer: PCT/EP2016/077731
(87) Internationale Veröffentlichungsnummer: WO 2017/093014

(56) Entgegenhaltungen:
- WO-A1-2013/178270
- Andreas Knoll: "TSN soll OPC UA echtzeitfähig machen", , 6. Mai 2015 (2015-05-06), XP055334870, Gefunden im Internet: URL:http://www.elektroniknet.de/markt-tech nik/automation/tsn-soll-opc-ua-echtzeitfae hig-machen-119445.html [gefunden am 2017-01-12]
- Anonymous: "The benefits of TSN Ethernet for automation networks", , 13. November 2015 (2015-11-13), XP055334866, Gefunden im Internet: URL:http://www.controlengeurope.com/articl e/106735/The-benefits-of-TSN-Ethernet-for- automation-networks.aspx [gefunden am 2017-01-12]

## Beschreibung

Es soll ein Verfahren angegeben werden, welches die industrielle Kommunikation über das TSN Protokoll mittels Sockets ermöglicht.

Die heute am weitesten verbreitete Art in Netzwerken zu kommunizieren erfolgt über den IP-Stack. Hierbei verwenden die Applikationen in der Regel das wohl definierte Socket Interface (BSD Sockets etc.). Der Ablauf der Kommunikation insbesondere beim UDP Protokoll erfolgt üblicherweise in diesen Schritten:
1.) Create Socket
2.) Bind
3.) Send / Receive
4.) Close

Da die Kommunikation mittels des UDP (User Datagram Protocol) im Gegensatz zum Transport Control Protocol, (TCP) verbindungslos, ungesichert und gerichtet erfolgt, müssen zusätzliche Sicherungsmaßnahmen applikativ etabliert werden.

Mit Time Sensitive Networking (TSN, IEEE 802.1) definiert die Standardisierungsorganisation einen neuen Netzwerk Standard auf Netzwerk-Ebene 2, der die Qualität (QoS, Übertragungssicherheit) im Netzwerk in Form von Streams garantiert. Ein Stream ist hierbei wie ein Kanal zu verstehen, bei dem ein Talker (auch Daten-Quelle, Sender, Server, ... genannt) Daten periodisch an einen oder mehrere Listener (auch Daten-Senke, Empfänger, Client, ... genannt) verschickt. Diese neue Netzwerk-Eigenschaft von TSN ist für industrielle Anwendungen und multi-media Anwendungen unverzichtbar.

Beispielsweise in der Druckschrift "TSN soll OPC UA echtzeitfähig machen", Andreas Knoll, gefunden unter www.elektroniknet.de/markt-technik/automation/tsn-soll-opc-ua-echtzeitfähig-machen-119445.html wird bereits OPC UA als in der Zukunft bevorzugtes neues Kommunikationsprotokoll für eine Datenkommunikation in der Industrie 4.0 genannt.

Das selbe Thema wird auch in dem Artikel "The benefits of TSN Ethernet for automation networks", gefunden unter www.controlengeurope.com/article/106735/The-benefits-of-TSN-Ethernet-for-automation-networks.aspx beschrieben.

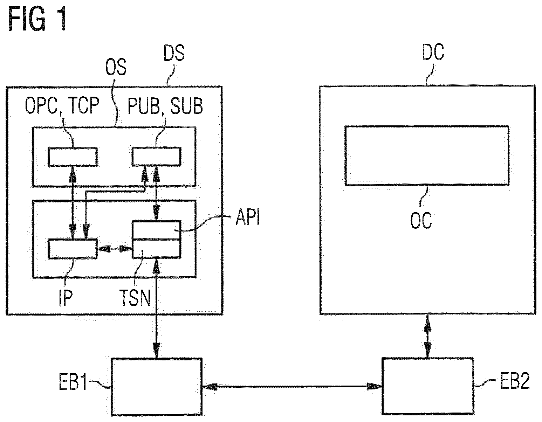

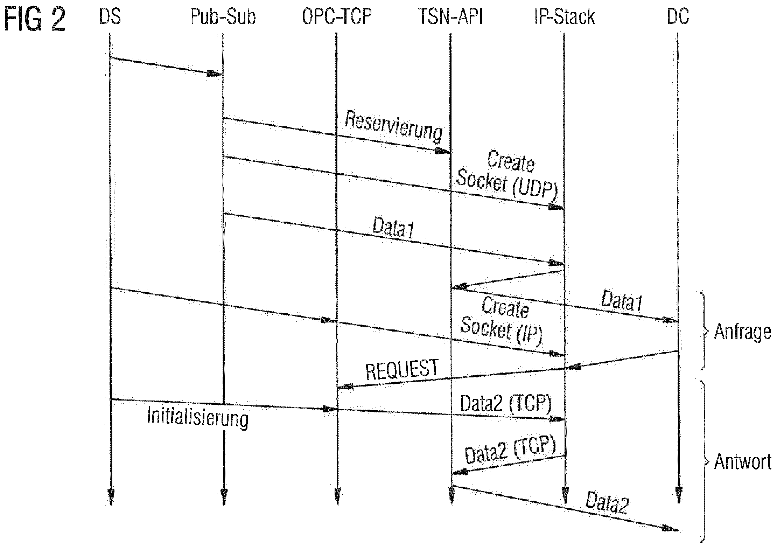

Eine mögliche Lösung, die bereits in den Standardisierungsgremien diskutiert wird, ist in den Figuren 1 und 2 näher dargestellt.
Figur 1 zeigt den schematischen Aufbau eines Netzes mit OPC UA Client (DC) und korrespondierendem Server, DS, wobei der Server die gewünschten Daten dem Client DC zur Verfügung stellt. Die beiden Geräte (nur beispielhaft eingefügt) sind im vorliegenden Fall durch Bridges EB1, EB2, miteinander verbunden. Im Folgenden konzentrieren wir uns auf den OPC UA Server DS, daher ist der OPC UA Client auch nicht weiter aufgegliedert. Der Server beinhaltet eine Applikation OS, welche die Daten verwaltet und einen Netztreiber ND, welcher die Kommunikation mit dem Netz mittels der jeweils gewünschten Protokolle sicherstellt. Über die Pfeile zwischen OPC-TCP bzw. Pub-Sub wird dargestellt, dass die Kommunikation sowohl über TSN (TSN mit API) als auch über UDP (über Pub/Sub und IP Stack) möglich ist, unabhängig voneinander. Beide Kommunikationswege müssen in der Applikation OS aber separat realisiert werden.
Die Figur 2 stellt den zugehörigen Datenfluss dar, auch hier werden ggf. benötigte UDP und IP Sockets getrennt erstellt und die Datenübertragung erfolgt getrennt. Request und Response sind dabei aus der OPC-UA Welt und stellen die Abfrage der gewünschten Prozeßdaten Data1, Data2 dar.

Auch in den Figuren ist das Problem erkennbar, dass zwei unterschiedliche Disziplinen aufeinandertreffen, die nicht einfach aufeinander abbildbar sind. Die TSN Sicht ist sehr auf das Netzwerk und dessen automatische Konfiguration fokussiert.
Allerdings ist die applikative Konfiguration und Etablierung der Kommunikation in TSN sehr aufwendig und durch unterschiedliche API's (Application Programming Interfaces) realisiert. Diese sind für die Applikationsebene sehr schwer zu verstehen und zu behandeln.
Auf der anderen Seite existiert mit den Sockets eine wohlverstandene Standardmethode für Applikationen um miteinander gerichtet zu kommunizieren. Diese kommt aus der Internet Welt und setzt sich immer mehr auch in der industriellen Kommunikation durch. Ein Beispiel dafür ist das OPC-UA Protokoll (OPC Unified Architecture).
Beide Welten passen heute nicht zusammen, sie existieren parallel nebeneinander. Applikationen sind dabei entweder für die eine oder andere Welt geschrieben.
Eine Applikation die TSN nutzen möchte muss die unterschiedlichen API's von TSN bedienen. Möchte sie zusätzlich über IP kommunizieren muss sie zusätzlich noch Sockets unterstützen. Der Mechanismus der Kommunikation über Sockets kann heute bei TSN nicht verwendet werden.

Es ist nun die Aufgabe der Erfindung, dieses Problem zu lösen und ein Verfahren anzugeben, welches die Kommunikation ermöglicht.

Diese Aufgabe wird gelöst durch ein Verfahren mit den Merkmalen des Patentanspruchs 1. Die Aufgabe wird ebenfalls gelöst durch eine Vorrichtung mit den Merkmalen des Patentanspruchs 7.

Es wird ein Verfahren angegeben, mittels dessen es möglich ist, die Kommunikationsdynamik von TSN Streams auf UDP Socket Verbindungen abzubilden.

Da für TSN weitere Informationen (z. B. für die Reservierung) notwendig sind, und die Etablierungsphase anders abläuft als bei UDP ist dies aber nicht direkt möglich. Bei TSN muss vor der eigentlichen Kommunikation (Produktivphase) eine Etablierung des Kommunikations-Streams erfolgen (Konfigurationsphase). Hierbei wird mindestens eine TSpec von der Applikation an den TSN Treiber gesendet, der die Eigenschaften des Streams beschreibt.

Um die Idee umzusetzen wird eine neue Kommunikationsklasse im Umfeld von IP definiert (Heute SOCK_DGRAM (UDP) und SOCK_STREAM (TCP) - neu dazu kommt SOCK_TS_STREAM (TSN)).

Für die Erweiterung der Adressenstruktur wird außerdem eine neue Address Family definiert (AF_INET_TS). Die Adressenstruktur enthält dann neben der IP Adresse auch die Stream ID.
Solche Erweiterungen sind im TCP/IP Umfeld vorgesehen.

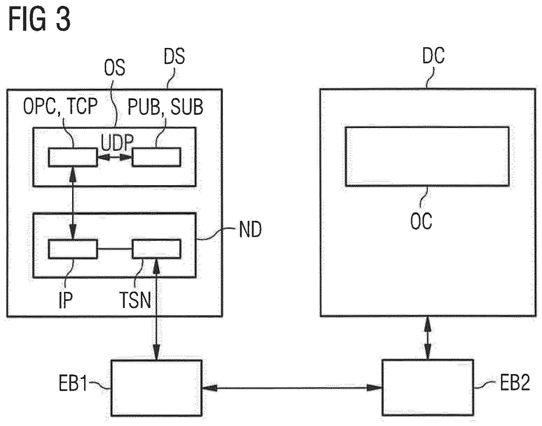

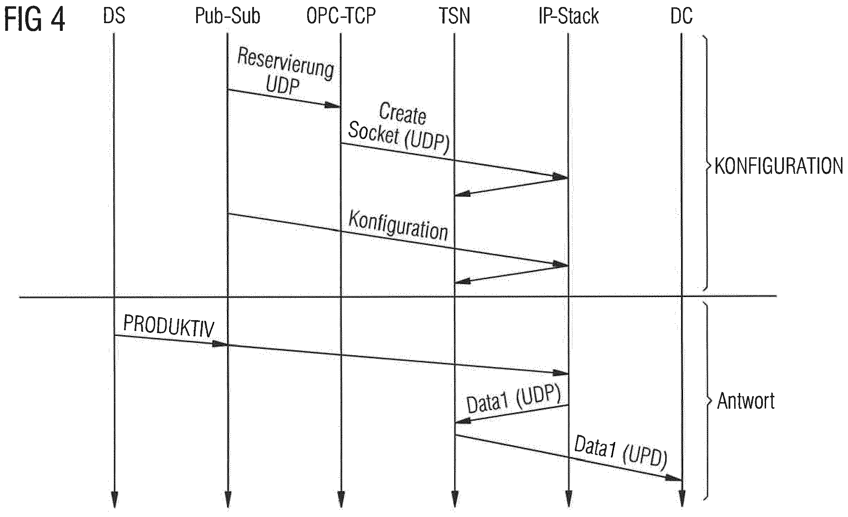

Die Etablierung der Verbindung auf Talker Seite wird beispielhaft und analog zur Figur 2 durch das in Figur 4 schematisch angedeutete Ablaufdiagramm dargestellt. Die Kommunikation, insbesondere der durch Pfeile angedeutete Netzelemente DS, PUB-SUB, OPC-TCP, TSN-API, IP-Stack, DC basiert auf dem in Figur 3 dargestellten Netzaufbau, analog zu Figur 1.

Eine Applikation erzeugt einen Socket mit dieser neuen Klasse und der neuen Address Family. 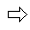 Socket = socket(AF_INET_TS, SOCK_TS_STREAM, 0)

Im zweiten Schritt wird dieser Socket an eine Adresse gebunden. Durch diese Bindung wird eine konkrete Verbindung zu einer Netzwerkkarte (und damit auch zum richtigen TSN Treiber in das Zielnetzwerk) hergestellt. Die Adressenstruktur folgt der neu definierten Address Family, die Stream ID in der Struktur ist null. 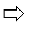 bind(Socket, address, address_len)

Damit ist die Verbindung zwischen Socket OS (Applikation) und Netzwerkkarte TSN (TSN Treiber) hergestellt.
Dieser spezielle TS_STREAM Socket befindet sich im Konfigurationsmodus, einen solchen Modus kennt UDP nicht.
In dem Konfigurationsmodus sendet die Applikation die Reservierungsparameter (TSpec,...) mit dem Standard send() an den Socket.
Alternativ dazu können die Konfigurationsdaten auch über ioctl() an den Treiber übergeben werden (über den Socket).

Der TSN Treiber wertet diese Daten aus. Der neue TSN Stream wird etabliert. Der TSN Treiber sendet die StreamID, die er generiert hat, von diesem neuen Stream über den Socket an die Applikation zurück.

Die Applikation liest diese Stream ID aus dem Socket und kann diese an potentielle Listener "out of band" (z. B. über eine andere TCP Verbindung) senden.
Erst wenn sich im Netzwerk ein oder mehrere Listener an diesen Stream anbinden, sendet der TSN Treiber das Ereignis der vollständigen Etablierung des Streams über den Socket an die Applikation. Hierdurch wird der Konfigurationsmodus verlassen und die Applikation beginnt zyklisch die Nutzdaten auf den Socket zu senden. (Produktivmodus)
Aus diesem Modus ist kein Weg vorgesehen, um wieder in den Konfigurationsmodus zu kommen. Sollte dies notwendig sein, muss dieser Stream geschlossen und neu aufgebaut werden.

Treten im Produktivmodus Fehler auf, z. B. dass sich alle Listener abgemeldet haben, schließt der TSN Treiber die Verbindung. Der Applikation ist damit bekannt, dass keine Listener mehr da sind, oder der Stream aus einem anderen Grund nicht mehr existiert. Während der Konfigurationsphase kann die Applikation einen Timeout setzen, wie lange der TSN Treiber den Stream aufrecht erhält, wenn keine Listener vorhanden sind.

Etablierung der Verbindung auf Listener Seite:
Der Listener bekommt "out of band" (z. B. über eine separate TCP Verbindung) die Adresse mit Stream ID nebst einer (optionalen, applikativen) Inhaltsbeschreibung des Streams.
Der Listener erzeugt einen Socket mit derselben neuen Klasse wie oben beschrieben. 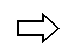 Socket = socket(AF_INET_TS, SOCK_TS_STREAM, 0)

Im zweiten Schritt wird dieser Socket an die lokale Adresse gebunden. Durch diese Bindung wird eine konkrete Verbindung zu einer Netzwerkkarte (und damit auch zum richtigen TSN Treiber in das Zielnetzwerk) hergestellt. Die Adressstruktur enthält neben der IP Adresse auch die Stream ID.
Die überschriebene Adressstruktur ist durch die Address Family AF_INET_TS gekennzeichnet. 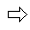 bind(Socket, address, address_len);

Nach dem erfolgreichen Bind ist der Listener sofort im Produktivmodus und wartet auf die zyklischen Pakete des Talkers. Pakete von dem Stream werden mittels RecvFrom() empfangen, die bei RcvFrom verwendete Adresse (Parameter: src_Adress) ist die über "out-of-band" empfangene Stream-Adresse. 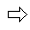 recvfrom(Socket, buffer, length, flags, src_addr, src_len)

Zur Verdeutlichung: Ein Listener wird nie auf den Socket senden. Kommunikation bei TSN ist immer unidirectional von genau einem Talker zu einer beliebigen Anzahl von Listenern.

Will der Listener sich abmelden, schließt er den Socket. 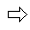 Close(Socket);

Durch das beschriebene Verfahren wird die Möglichkeit geschaffen, mit der, dem "Internet" Programmierer bekannten, Socket Programmierung über TSN Streams zu kommunizieren. Dadurch wird die einfache Nutzung der neuen TSN Qualität für die einfache Internet (IP) Programmierung möglich.

Existierende Anwendungen können ohne großen Aufwand für TSN erweitert werden, so dass diese einfach von der Robustheit von TSN profitieren.
Parallelbetrieb ist "seamless" möglich - es wird immer derselbe Mechanismus verwendet.

## Patentansprüche

1. Verfahren zur industriellen Kommunikation einer Applikation (PUB, SUB) eines OPC-UA Servers über einen Time Sensitive Networking Server (TSN) mit zumindest einem TSN Client (DC) mittels OPC-UA Protokoll, **gekennzeichnet durch**
a) eine erste Konfigurationsphase zur Etablierung eines Datenstreams, mit folgenden Schritten:
- Verbindungsaufbau der Applikation zu einem TCP/IP Stack mittels Erzeugen eines Sockets (Create Socket),
- Binden des erzeugten Sockets an eine Adresse eines TSN Treibers,
- Konfigurieren der Verbindung des erzeugten Sockets (Configuration) durch Senden von Reservierungsparametern von der Applikation an den Socket (Reservierung),
- Etablierung eines TSN Stream und Setzen einer StreamID vom TSN Treiber, welche an die Applikation zurück gesendet wird,
- Mitteilung der StreamID an den TSN Client und b) eine zweite Phase nach Etablierung des TSN Streams mit mit zumindest einem Empfänger in Form des zumindest einen TSN Client (DC), in der Nutzdaten (Data1) auf den Socket an den zumindest einen TSN Client (DC) gesendet werden.

2. Verfahren gemäß Patentanspruch 1,
**dadurch gekennzeichnet, dass**
zur Erzeugung des Sockets für TSN eine eigene Kommunikationsklasse für die Bindung an den Socket verwendet wird.

3. Verfahren gemäß Patentanspruch 1 oder 2,
**dadurch gekennzeichnet, dass**
die für die Bindung des Socket verwendete Adressstruktur zusätzlich zu einer IP Adresse auch einen Identifikator für den TSN Stream enthält.

4. Verfahren gemäß einem der vorherigen Patentansprüche, **dadurch gekennzeichnet, dass**
eine Änderung des TSN Streams erfolgt durch Schließen und Neuaufbau des TSN Streams.

5. Verfahren gemäß einem der vorherigen Patentansprüche, **dadurch gekennzeichnet, dass**
der TSN Stream automatisch geschlossen wird, wenn ein Fehler auftritt oder nicht zumindest ein Empfänger (DC) an den TSN Server angeschlossen ist.

6. Verfahren gemäß einem der vorherigen Patentansprüche, **dadurch gekennzeichnet, dass**
beim Aufbau eines TSN Streams ein Zeitfenster definiert wird, welches angibt, nach welchem Zeitraum der TSN Stream automatisch geschlossen wird, wenn nicht zumindest ein Empfänger (DC) an den TSN Server angeschlossen ist.

7. OPC UA Server (DS), mit einer Applikation (OS) zur Datenverwaltung und einen Netztreiber (ND) mit einem TSN-Server (TSN), der die Kommunikation mit dem Netz durchführt, wobei die Applikation (OS) und der TSN-Server (TSN) ausschließlich über einen TCP/IP Stack (TCP, IP) miteinander kommunizieren, zur Durchführung einer industriellen Kommunikation in einem Time Sensitive Network gemäß einem Verfahren nach einem der Patentansprüche 1 bis 6.

## Claims

1. Method for industrial communication by an application (PUB, SUB) of an OPC UA server via a time sensitive networking server (TSN) with at least one TSN client (DC) by means of the OPC UA protocol,
**characterized by**
a) a first configuration phase for establishing a data stream, having the following steps:
- connection setup by the application to a TCP/IP stack by producing a socket (Create Socket),
- binding the socket produced to an address of a TSN driver,
- configuring the connection of the socket produced (configuration) by sending reservation parameters from the application to the socket (reservation),
- establishing a TSN stream and setting a StreamID by means of the TSN driver, which is returned to the application,
- communicating the StreamID to the TSN client, and
b) a second phase after the TSN stream is established with at least one receiver in the form of the at least one TSN client (DC), in which user data (Data1) are sent to the at least one TSN client (DC) using the socket.

2. Method according to Patent Claim 1,
**characterized in that**
the socket is produced for the TSN by using a separate communication class for binding to the socket.

3. Method according to Patent Claim 1 or 2,
**characterized in that**
the address structure used for binding the socket also includes, in addition to an IP address, an identifier for the TSN stream.

4. Method according to one of the preceding patent claims, **characterized in that**
the TSN stream is changed by closing and freshly setting up the TSN stream.

5. Method according to one of the preceding patent claims, **characterized in that**
the TSN stream is closed automatically if a fault occurs or at least one receiver (DC) is not connected to the TSN server.

6. Method according to one of the preceding patent claims, **characterized in that**
setup of a TSN stream results in a time window being defined that indicates the period after which the TSN stream is automatically closed if at least one receiver (DC) is not connected to the TSN server.

7. OPC UA server (DS), having an application (OS) for data management and a network driver (ND) having a TSN server (TSN) that performs the communication with the network, wherein the application (OS) and the TSN server (TSN) communicate with one another exclusively via a TCP/IP stack (TCP, IP), for performing industrial communication in a time sensitive network using a method according to one of Patent Claims 1 to 6.

## Revendications

1. Procédé de communication industrielle d'une application (PUB, SUB) d'un serveur OPC-UA par le biais d'un serveur Time Sensitive Networking (TSN) comprenant au moins un client TSN (DC) au moyen d'un protocole OPC-UA,
**caractérisé par**
a) une première phase de configuration pour établir un flux de données, comprenant les étapes suivantes :
- établissement d'une liaison de l'application vers une pile TCP/IP par création d'une socket (Create Socket),
- liaison de la socket créée à une adresse d'un pilote TSN,
- configuration de la liaison de la socket créée (configuration) par envoi de paramètres de réservation de l'application à la socket (réservation),
- établissement d'un flux TSN et mise en place d'un StreamID du pilote TSN qui est renvoyé à l'application,
- communication du StreamID au client TSN et
b) une seconde phase après établissement du flux TSN avec au moins un récepteur sous forme de l'au moins un client TSN, dans laquelle des données utiles (Data1) sur la socket sont envoyées à l'au moins un client TSN (DC).

2. Procédé selon la revendication 1, **caractérisé en ce que** pour créer la socket pour TSN, une classe de communication propre est employée pour la liaison à la socket.

3. Procédé selon la revendication 1 ou 2, **caractérisé en ce que** la structure d'adresse employée pour la liaison de la socket contient également un identificateur pour le flux TSN, en plus d'une adresse IP.

4. Procédé selon l'une des revendications précédentes, **caractérisé en ce qu'**une modification du flux TSN est effectuée par fermeture et nouvel établissement du flux TSN.

5. Procédé selon l'une des revendications précédentes, **caractérisé en ce que** le flux TSN est fermé automatiquement si une erreur se produit ou s'il n'y a pas au moins un récepteur (DC) raccordé au serveur TSN.

6. Procédé selon l'une des revendications précédentes, **caractérisé en ce que** lors de l'établissement d'un flux TSN, une fenêtre temporelle est définie qui indique après quel délai le flux TSN est fermé automatiquement s'il n'y a pas au moins un récepteur (DC) raccordé au serveur TSN.

7. Serveur OPC UA (DS) comprenant une application (OS) pour la gestion de données et un pilote de réseau (ND) comprenant un serveur TSN (TSN) qui effectue la communication avec le réseau, dans lequel l'application (OS) et le serveur TSN (TSN) communiquent entre eux exclusivement par le biais d'une pile TCP/IP (TCP, IP), pour exécuter une communication industrielle dans un réseau Time Sensitive Network selon un procédé selon l'une des revendications 1 à 6.
